# FASCICULE DE BREVET EUROPEEN

(11) **EP 1 836 469 B1**
(45) Date de publication et mention de la délivrance du brevet: **28.05.2008**
(21) Numéro de dépôt: 05825166.1
(22) Date de dépôt: 14.12.2005
(51) Int. Cl.: G01M 17/007

(54) **DISPOSITIF DE SOUFFLAGE D'AIR POUR REFROIDIR LE MOTEUR À COMBUSTION INTERNE D'UN VÉHICULE TESTÉ SUR BANC À ROULEAUX**
LUFTBLASEINRICHTUNG ZUR KÜHLUNG DES VERBRENNUNGSMOTORS EINES AUF EINER WALZENBÜHNE GEPRÜFTEN FAHRZEUGS
AIR BLOWING DEVICE FOR COOLING THE INTERNAL COMBUSTION ENGINE OF A VEHICLE TESTED ON A ROLLER BENCH

(30) Priorité: 16.12.2004 FR 0413411
(43) Date de publication de la demande: 26.09.2007
(73) Titulaire: Renault SAS, 92100 Boulogne Billancourt (FR)
(72) Inventeur: LAMBOLEZ, Mathieu, F-75015 Paris (FR)
(86) Numéro de dépôt international: PCT/FR2005/051086
(87) Numéro de publication internationale: WO 2006/064162

(56) Documents cités:
- EP-A- 0 857 959
- EP-A- 1 215 474
- DE-C1- 3 715 016
- DE-U1- 20 001 978
- DE-U1- 20 218 050
- US-A- 3 926 043
- US-A- 4 161 116
- US-A- 4 799 390
- US-A- 4 964 298
- US-A- 5 526 675
- US-A- 5 533 388
- US-A- 5 777 243
- US-A- 6 044 696
- US-A1- 2002 043 102
- US-A1- 2002 152 799

## Description

La présente invention concerne un dispositif de soufflage d'air pour refroidir le moteur à combustion interne d'un véhicule automobile testé sur un banc à rouleaux.

Les dispositifs de soufflage connus comprennent un ventilateur de soufflage d'air adapté pour souffler de l'air vers l'ouverture d'entrée prévue à l'avant du véhicule afin de diriger le flux d'air vers le radiateur du moteur.

Les documents US 5 777 243 A, US 4 799 390 A, DE 37 15 016 C1 et US 5 533 388 A décrivent un dispositif de soufflage d'air pour refroidir le moteur à combustion interne d'un véhicule automobile apte à être testé sur un banc à rouleaux, comprenant:
- un *ventilateur* de soufflage d'air adapté pour souffler l'air vers l'ouverture d'entrée d'air prévue sur le véhicule pour diriger le flux d'air vers les organes de refroidissement du moteur, et
- une *buse* placée entre l'ouverture de sortie du ventilateur de soufflage d'air et ladite ouverture prévue sur le véhicule, cette buse ayant une section transversale par rapport au flux d'air qui décroît progressivement entre ladite ouverture de sortie du ventilateur et ladite ouverture d'entrée du véhicule.

Lorsque le véhicule roule sur la route, le flux d'air ci-dessus est créé par le déplacement du véhicule dans l'air.

Lorsqu'un véhicule est testé sur un banc à rouleaux, il est nécessaire de créer le flux d'air ci-dessus au moyen d'un ventilateur de soufflage d'air pour éviter un échauffement excessif du moteur à combustion.

L'idéal serait que le ventilateur puisse créer un flux d'air identique à celui pénétrant dans l'ouverture d'entrée d'air prévue à l'avant du véhicule lorsque celui-ci roule aux vitesses autorisées sur la route.

Les dispositifs de soufflage d'air connus ne permettent pas de reconstituer les conditions idéales ci-dessus car ils ne sont pas capables de concentrer efficacement le flux d'air vers l'ouverture d'entrée d'air du véhicule.

Un but de la présente invention est de remédier à cet inconvénient.

La présente invention permet de concentrer le flux d'air produit par le ventilateur vers l'ouverture d'entrée d'air prévue sur le véhicule testé sur le banc à rouleaux, de sorte que cette ouverture d'entrée d'air reçoive un flux d'air comparable à celui qu'elle reçoit lorsque le véhicule roule sur la route.

Lorsque le véhicule est testé sur un banc à rouleaux, il a tendance à riper latéralement sur ceux-ci. Pour éviter cela, on prévoit des sangles pour arrimer le véhicule. Cependant, la présence de la buse dans la zone de passage des sangles présente une difficulté.

Un autre but de la présente invention est de remédier à cet inconvénient.

Suivant l'invention, le dispositif de soufflage d'air pour refroidir le moteur à combustion interne d'un véhicule automobile testé sur un banc à rouleaux comprenant un ventilateur de soufflage d'air adapté pour souffler l'air vers l'ouverture d'entrée d'air prévue sur le véhicule pour diriger le flux d'air vers les organes de refroidissement du moteur, comprenant une buse placée entre l'ouverture de sortie du ventilateur de soufflage d'air et ladite ouverture prévue sur le véhicule, cette buse ayant une section transversale par rapport au flux d'air qui décroît progressivement entre ladite ouverture de sortie du ventilateur et ladite ouverture d'entrée du véhicule, caractérisé en ce que ladite buse comporte deux parois latérales présentant chacune une ouverture permettant le passage d'une sangle dont l'une des extrémités est destinée à être fixée au véhicule et l'autre extrémité est destinée à être fixée à une paroi verticale fixe placée près de la sortie du ventilateur.

De préférence, lorsque les deux sangles sont fixées, elles convergent vers un point de fixation du véhicule, en entrant chacune dans l'une des ouvertures latérales de la buse et en ressortant de celle-ci par sa sortie.

Ce point de fixation du véhicule peut être son crochet de remorquage.

Selon une version préférée de l'invention, chacune des ouvertures latérales de la buse est constituée par une série de fentes verticales et parallèles, chacune de ces fentes présentant une largeur adaptée au passage de l'une des deux sangles.

Cette disposition permet de modifier le passage des sangles, en fonction du véhicule qui est testé, notamment en fonction de l'emplacement de son crochet de remorquage qui varie d'un véhicule à l'autre.

De préférence, les fentes autres que celle servant de passage pour l'une des sangles sont fermées par des plaquettes amovibles.

Cette disposition évite toute déperdition de flux d'air par les fentes non utilisées pour le passage d'une sangle.

Selon d'autres particularités avantageuses de l'invention :
- l'entrée de la buse est raccordée de façon sensiblement étanche à la sortie du ventilateur de soufflage ;
- la section de la sortie de la buse correspond sensiblement à la moyenne de la section des ouvertures d'entrée d'air prévues sur l'ensemble des véhicules de grande série ;
- la section transversale de la buse est sensiblement rectangulaire ;
- la paroi supérieure de la buse est arrondie et sa paroi inférieure est plane et s'étend de façon sensiblement parallèle au sol.

D'autres particularités et avantages de l'invention apparaîtront encore dans la description ci-après.

Aux dessins annexés, donnés à titre d'exemples non limitatifs :
- la figure 1 est un schéma d'ensemble montrant en coupe longitudinale un dispositif de soufflage selon l'invention, placé devant un véhicule testé sur un banc à rouleaux,
- la figure 2 est une vue en plan du dispositif de soufflage et de la partie avant du véhicule,
- la figure 3 est une vue en perspective de la buse de soufflage du dispositif selon l'invention, montrant le passage des deux sangles d'arrimage du véhicule,
- la figure 4 est une vue en perspective partielle de l'une des ouvertures latérales de la buse.

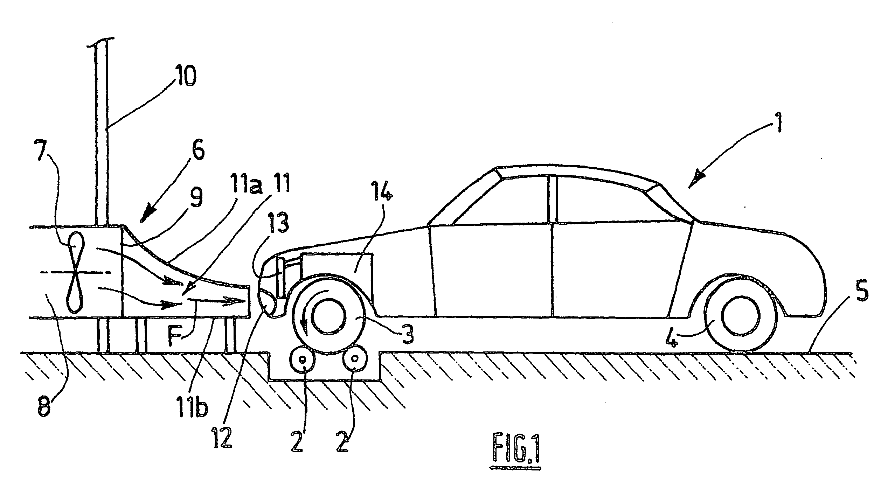

La figure 1 représente un véhicule automobile 1 en position sur un banc d'essai à rouleaux 2. S'agissant d'un véhicule à traction avant, les deux roues avant 3 du véhicule 1 reposent sur les deux rouleaux 2 et entraînent ceux-ci en rotation.

Les roues arrière 4 du véhicule 1 reposent au sol 5.

Devant le véhicule 1 est installé un dispositif de soufflage d'air 6. Ce dispositif comprend un ventilateur 7 entraîné en rotation suivant un axe horizontal dans un conduit 8 dont l'ouverture de sortie 9 débouche sur la face d'une paroi 10 adjacente au véhicule 1.

Conformément à l'invention, une buse 11 est placée entre l'ouverture de sortie 9 du conduit 8 du ventilateur 7 et l'ouverture 12 prévue à l'avant du véhicule 1 qui permet de diriger le flux d'air F vers le radiateur 13 de refroidissement du moteur 14.

La section de la buse 11 transversale par rapport au flux d'air F décroît progressivement entre l'ouverture de sortie 9 du conduit 8 du ventilateur 7 et l'ouverture d'entrée d'air 12 du véhicule 1.

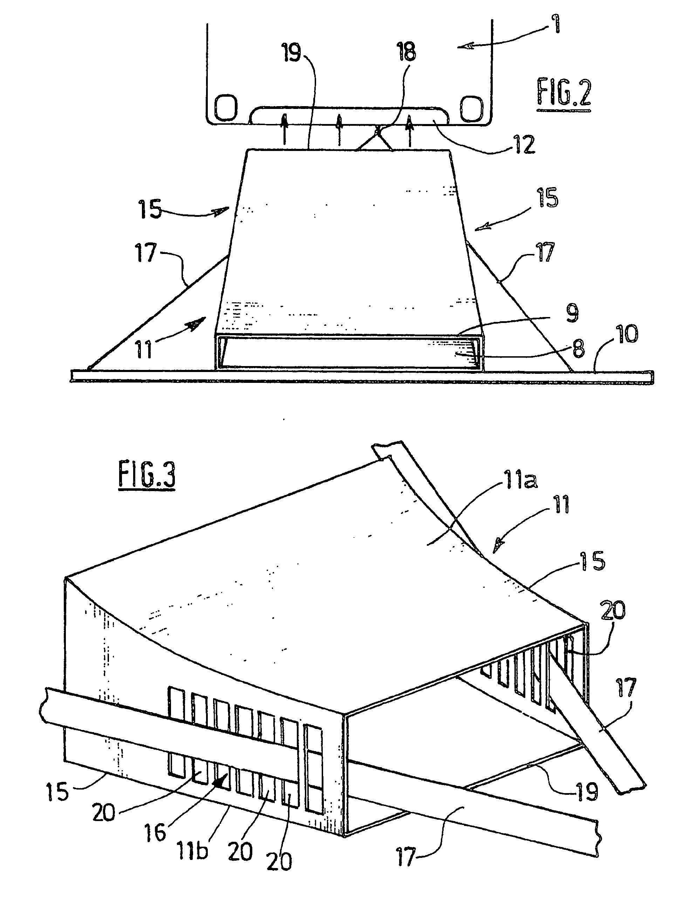

Comme montré sur les figures 2 et 3, la buse 11 comporte deux parois latérales 15 présentant chacune une ouverture 16 permettant le passage d'une sangle 17 dont l'une des extrémités est fixée (voir figure 2) au véhicule et l'autre extrémité est fixée à la paroi verticale 10 de laquelle débouche la sortie 9 du conduit du ventilateur 7.

On voit sur la figure 2 que, lorsque les deux sangles 17 sont fixées, elles convergent vers un point de fixation 18 constitué par le crochet de remorquage du véhicule. Chaque sangle 17 entre dans une ouverture latérale 16 de la buse 11 et ressort de celle-ci par sa sortie 19.

Chaque ouverture latérale 16 est formée par une grille présentant une série de fentes 20 verticales et parallèles présentant une largeur adaptée au passage de l'une des deux sangles 17.

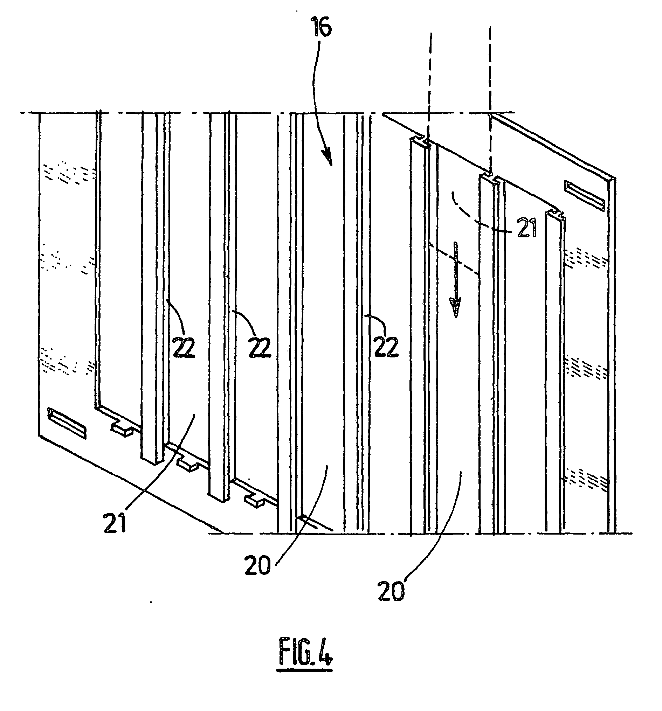

Sur chaque grille des ouvertures latérales 16, les fentes 20 autres que celle servant au passage d'une sangle 17 peuvent être fermées par des plaquettes amovibles, telles que la plaquette 21 représentée en pointillés sur la figure 4.

Dans l'exemple représenté sur la figure 4, les fentes 20 comportent de chaque côté, une glissière 22 permettant une fixation par coulissement d'une plaquette 21.

Les fentes 20 prévues sur les ouvertures latérales 16 de la buse 11 permettant de régler la position spatiale des sangles 17 en fonction des caractéristiques du véhicule 1 et en particulier de la position de son crochet de remorquage 18.

Ainsi, la buse de soufflage 11 peut convenir à une grande variété de véhicules.

Par ailleurs, les plaquettes 21 qui ferment les fentes 20 non utilisées pour les sangles permettent de limiter les fuites du flux d'air vers les côtés de la buse 11.

Pour limiter également les fuites du flux d'air, l'entrée de la buse 11 est raccordée de façon sensiblement étanche (voir figure 2) à la sortie 9 du conduit du ventilateur de soufflage 7.

Pour cette raison, la sortie 19 de la buse 11 est disposée le plus près possible de l'ouverture d'entrée d'air 12 du véhicule 1.

L'idéal serait également que la section de la sortie 19 de la buse 11 corresponde à celle de l'ouverture d'entrée d'air 12 du véhicule 1.

Cependant, afin que la buse 11 puisse être utilisée pour une grande variété de véhicules produits en grande série, la buse 11 est conçue de façon à ce que la section de sa sortie 19 corresponde à la moyenne de la section des ouvertures d'entrée 12 prévues sur cet ensemble de véhicules.

Dans l'exemple représenté sur les figures 1 à 3, la section transversale de la buse 11 est rectangulaire. De plus, sa paroi supérieure 11a est arrondie et sa paroi inférieure 11b est plane et s'étend de façon sensiblement parallèle au sol 5.

La forme arrondie de la paroi supérieure 11a permet de minimiser les turbulences.

Le dispositif de soufflage que l'on vient de décrire permet de créer un flux d'air présentant à la sortie de la buse 11 une vitesse pouvant atteindre 130 km/h comparable au flux d'air pénétrant dans l'ouverture avant 12 du véhicule circulant sur la route à la vitesse de 130 km/h ci-dessus.

L'invention permet ainsi de mettre les véhicules testés sur un banc à rouleaux aux mêmes conditions de refroidissement que celles qu'ils rencontrent sur la route.

## Revendications

1. Dispositif de soufflage d'air pour refroidir le moteur à combustion interne (14) d'un véhicule automobile (1) testé sur un banc à rouleaux (2) comprenant un ventilateur (7) de soufflage d'air adapté pour souffler l'air vers l'ouverture (12) d'entrée d'air prévue sur le véhicule (1) pour diriger le flux d'air (F) vers les organes de refroidissement du moteur, comprenant une buse (11) placée entre l'ouverture de sortie (9) du ventilateur (7) de soufflage d'air et ladite ouverture (12) prévue sur le véhicule (1), cette buse (11) ayant une section transversale par rapport au flux d'air (F) qui décroît progressivement entre ladite ouverture de sortie (9) du ventilateur (7) et ladite ouverture d'entrée (12) du véhicule (1), **caractérisé en ce que** ladite buse (11) comporte deux parois latérales (15) présentant chacune une ouverture (16) permettant le passage d'une sangle (17) dont l'une des extrémités est destinée à être fixée au véhicule (1) et l'autre extrémité est destinée à être fixée à une paroi verticale fixe (10) placée près de la sortie (9) du ventilateur (7).

2. Dispositif de soufflage d'air selon la revendication 1, **caractérisé en ce que** lorsque les deux sangles (17) sont fixées, elles convergent vers un point de fixation (18) du véhicule (1), en entrant chacune dans l'une des ouvertures latérales (16) de la buse (11) et en ressortant de celle-ci par sa sortie (19).

3. Dispositif de soufflage selon la revendication 2, **caractérisé en ce que** ledit point de fixation (18) du véhicule est le crochet de remorquage.

4. Dispositif de soufflage d'air selon l'une des revendications 1 à 3, **caractérisé en ce que** chacune des ouvertures latérales (16) de la buse (11) est constituée par une série de fentes (20) verticales et parallèles, chacune de ces fentes (20) présentant une largeur adaptée au passage de l'une des deux sangles (17).

5. Dispositif de soufflage d'air selon la revendication 4, **caractérisé en ce que** les fentes (20) autres que celle servant de passage pour l'une des sangles (17) sont fermées par des plaquettes amovibles (21).

6. Dispositif de soufflage d'air selon l'une des revendications 1 à 5, **caractérisé en ce que** l'entrée de la buse (11) est raccordée de façon sensiblement étanche à la sortie (9) du ventilateur de soufflage (7).

7. Dispositif de soufflage d'air selon l'une des revendications 1 à 6, **caractérisé en ce que** la section de la sortie (19) de la buse (11) correspond sensiblement à la moyenne de la section des ouvertures d'entrée (12) prévues sur l'ensemble des véhicules de grande série.

8. Dispositif de soufflage d'air selon l'une des revendications 1 à 7, **caractérisé en ce que** la section transversale de la buse (11) est sensiblement rectangulaire.

9. Dispositif de soulage d'air selon la revendication 8, **caractérisé en ce que** la paroi supérieure (11a) de la buse (11) est arrondie et sa paroi inférieure (11b) est plane et s'étend de façon sensiblement parallèle au sol (5).

## Claims

1. Air blower for cooling the internal-combustion engine (14) of a motor vehicle (1) being tested on a roller-type tes rig (2) comprising an air blower fan (7) designed to blow the air toward the air inlet opening (12) of the vehicle (1) in order to direct the air stream (F) toward the engine cooling components, comprising a nozzle (11) mounted between the outlet opening (9) of the air blower fan (7) and said opening (12) of the vehicle (1), this nozzle (11) having a cross section at right angles to the air stream (F) that decreases progressively between said outlet opening (9) of the fan (7) and said inlet opening (12) of the vehicle (1); which blower is **characterized in that** said nozzle (11) comprises two side walls (15), each having an opening (16) for the passage of a strap (17), one of whose ends is designed to be fixed to the vehicle (1) and the other to a fixed vertical wall (10) positioned near the outlet (9) of the fan (7).

2. Air blower according to Claim 1, **characterized in that** when the two straps (17) are fixed, they converge on a fixing point (18) on the vehicle (1) in such a way that each enters through one of the side openings (16) of the nozzle (11) and passes out of said nozzle through its outlet (19).

3. Air blower according to Claim 2, **characterized in that** said fixing point (18) of the vehicle is the towing hook.

4. Air blower according to one of Claims 1 to 3, **characterized in that** each of the side openings (16) in the nozzle (11) is made up of a series of parallel vertical slots (20), each slot (20) being of a width suitable for the passage of one of the two straps (17).

5. Air blower according to Claim 4, **characterized in that** slots (20) other than the slot being used for the passage of one of the straps (17) are closed off with removable slats (21).

6. Air blower according to one of Claims 1 to 5, **characterized in that** the nozzle (11) inlet is connected in an essentially airtight manner to the outlet (9) of the blower fan (7).

7. Air blower according to one of Claims 1 to 6, **characterized in that** the cross section of the outlet (19) of the nozzle (11) corresponds approximately to the average cross section of inlet openings (12) provided on the majority of production vehicles.

8. Air blower according to one of Claims 1 to 7, **characterized in that** the transverse cross section of the nozzle (11) is basically rectangular.

9. Air blower according to Claim 8, **characterized in that** the top wall (11a) of the nozzle (11) is rounded and its bottom wall (11b) is flat and approximately parallel to the ground (5).

## Patentansprüche

1. Lufteinblasvorrichtung zum Kühlen der Brennkraftmaschine (14) eines auf einem Rollenstand (2) getesteten Kraftfahrzeugs (1), mit einem Lufteinblasgebläse (7), das ausgelegt ist, um Luft in die Lufteinlassöffnung (12), die in dem Fahrzeug vorgesehen ist (1), einzublasen, um den Luftstrom (F) zu den Kühlelementen der Maschine zu lenken, und mit einer Düse (11), die zwischen der Auslassöffnung (9) des Lufteinblasgebläses (7) und der in dem Fahrzeug (1) vorgesehenen Öffnung (12) angeordnet ist, wobei diese Düse (11) einen Querschnitt in Bezug auf den Luftstrom (F) besitzt, der zwischen der Auslassöffnung (9) des Gebläses (7) und der Einlassöffnung (12) des Fahrzeugs progressiv abnimmt, **dadurch gekennzeichnet, dass** die Düse (11) zwei Seitenwände (15) aufweist, die jeweils eine Öffnung (16) besitzen, die den Durchgang eines Bandes (17) ermöglichen, wovon ein Ende dazu bestimmt ist, am Fahrzeug (1) befestigt zu werden, und das andere Ende dazu bestimmt ist, an einer festen vertikalen Wand (10) befestigt zu werden, die in der Nähe des Auslasses (9) des Gebläses (7) angeordnet ist.

2. Lufteinblasvorrichtung nach Anspruch 1, **dadurch gekennzeichnet, dass** die beiden Bänder (17) dann, wenn sie befestigt sind, zu einem Befestigungspunkt (18) des Fahrzeugs zusammenlaufen, indem sie jeweils in eine der seitlichen Öffnungen (16) der Düse (11) eintreten und hiervon durch deren Auslass (19) austreten.

3. Einblasvorrichtung nach Anspruch 2, **dadurch gekennzeichnet, dass** der Befestigungspunkt (18) des Fahrzeugs der Abschlepphaken ist.

4. Lufteinblasvorrichtung nach einem der Ansprüche 1 bis 3, **dadurch gekennzeichnet, dass** jede der seitlichen Öffnungen (16) der Düse (11) durch eine Reihe von vertikalen und parallelen Schlitzen (20) gebildet ist, wobei jeder dieser Schlitze (20) eine an den Durchgang eines der zwei Bänder (17) angepasste Breite besitzt.

5. Lufteinblasvorrichtung nach Anspruch 4, **dadurch gekennzeichnet, dass** die Schlitze (20) mit Ausnahme jener, die für den Durchgang eines der Bänder (17) dienen, durch abnehmbare Platten (21) verschlossen sind.

6. Lufteinblasvorrichtung nach einem der Ansprüche 1 bis 5, **dadurch gekennzeichnet, dass** der Einlass der Düse (11) auf im Wesentlichen dichte Weise mit dem Auslass (9) des Einblasgebläses (7) verbunden ist.

7. Lufteinblasvorrichtung nach einem der Ansprüche 1 bis 6, **dadurch gekennzeichnet, dass** die Querschnittsfläche des Auslasses (19) der Düse (11) im Wesentlichen der durchschnittlichen Querschnittsfläche der Einlassöffnungen (12) entspricht, die in allen Großserienfahrzeugen vorgesehen sind.

8. Luftblasvorrichtung nach einem der Ansprüche 1 bis 7, **dadurch gekennzeichnet, dass** die Querschnittsfläche der Düse (11) im Wesentlichen rechtwinklig ist.

9. Luftblasvorrichtung nach Anspruch 8, **dadurch gekennzeichnet, dass** die obere Wand (11a) der Düse (11) abgerundet ist und dass die untere Wand (11b) eben ist und sich im Wesentlichen parallel zum Boden (5) erstreckt.
